# EUROPÄISCHE PATENTANMELDUNG

(11) **EP 3 404 289 A1**
(43) Veröffentlichungstag der Anmeldung: **21.11.2018**
(21) Anmeldenummer: 17171146.8
(22) Anmeldetag: 15.05.2017
(51) Int. Cl.: F16G 13/20, E05F 11/00

(54) **MIT EINEM KETTENANTRIEB BETÄTIGBARE SCHIEBESTEIFE SCHUBKETTE**

(71) Anmelder: K+G Pneumatik GmbH, 52249 Eschweiler (DE)
(72) Erfinder: MAUL, Hans-Erich, 52068 Aachen (DE); KOHLER, Franz, 52249 Eschweiler (DE)
(74) Vertreter: Tergau & Walkenhorst Patentanwälte PartGmbB

(57) **Zusammenfassung**

Eine mit einem Kettenantrieb betätigbare schiebesteife Schubkette umfasst aus formgleichen Scheiben bündig zusammengesetzte Kettenglieder. Jede Scheibe weist wenigstens einen bogenförmigen Randabschnitt (3), der sich im Wesentlichen in einer Längsrichtung der Scheibe erstreckt, einen dem bogenförmigen Randabschnitt außen gegenüberliegenden Randabschnitt (2) und zahnförmige Vorsprünge (4, 5, 6) an einem der Randabschnitte (2, 3) auf. In jeder Scheibe sind zwei Bolzenaufnahmelöcher (7, 8) vorhanden, die jeweils einen Bolzen (17 bis 20) aufnehmen, der mehrere Scheiben zusammenhalten kann.

Jede Scheibe ist in Form einer Zahnsegmentscheibe (1) einem Zahnsegment eines Zahnrads nachgebildet ist, so dass aus dem bogenförmigen Randabschnitt (3) der Zahnsegmentscheibe (1) Zähne (4 bis 6) nach außen divergierend vorstehen. Der dem bogenförmigen Randabschnitt (3) außen gegenüberliegende Randabschnitt (2) ist in Längsrichtung der Zahnsegmentscheibe (1) gerade bzw. plan.

## Beschreibung

Die Erfindung betrifft eine mit einem Kettenantrieb betätigbare schiebesteife Schubkette nach dem Oberbegriff des Anspruchs 1.

Derartige Schubketten sollen Schubkräfte zumindest über einen Schubkettenabschnitt geradlinig übertragen, ohne in einer Richtung quer zu der Schubrichtung abzuknicken und als Gegenmaßnahme einer aufwendigen Führung zu bedürfen.

Andererseits sollen solche Schubketten in einer vorgegebenen Umlenkposition mit möglichst geringen Krafteinsatz umgelenkt werden, um anschließend in einer anderen linearen Schubrichtung zu verlaufen. Die Umlenkposition der Schubkette ist insbesondere auch deren Antriebsposition, in der ein Kettenrad eines Kettenantriebs in die Schubkette eingreift. Das Kettenrad ist in diesem Fall bezüglich des gekrümmten Schubkettenabschnitts, in den es eingreift, herkömmlich innen angeordnet.

Solche Schubketten werden beispielsweise zur Betätigung von Fenstern, Türen, Klappen und Lichtkuppeln, insbesondere in RWA-Anlagen in Gebäuden, eingesetzt.

Eine bekannte Schubkette, die den vorstehenden Anforderungen weitgehend genügt, besteht aus sandwichartigen zusammengesetzten Kettengliedern, deren Innenteil jeweils ein Scheibenpaket aus wenigstens zwei formgleichen, bündig angeordneten Scheiben umfasst (DE 20 2017 101 466.5). Die Scheiben sind zur guten Führung der Schubkette durch ein Antriebsgehäuse als Kreisscheibensegmente mit jeweils einem kreisabschnittsförmigen, von einem spitzen Rastnocken und einer kongruenten Rastvertiefung begrenzten Außenrand und einem sich daran anschließenden außen gegenüber liegenden eingebuchteten Innenrand geformt. Zwischen dem Außenrand und dem Innenrand jeder Scheibe sind neben der Einbuchtung des Innenrands zwei Bolzenaufnahmelöcher ausgebildet, die jeweils einen das Innenteil in dem Kettenglied fixierende Bolzen aufnehmen. Jeder der beiden Bolzen ist außerdem geeignet, in ein Bolzenaufnahmeloch in ebenfalls formgleichen, bündig angeordneten Scheiben eines seitlich benachbarten Scheibenpakets schwenkbar einzugreifen. Derartige Kettenglieder können fertigungsgünstig dimensioniert, d. h. an die zu übertragenden Schubkräfte angepasst werden, in dem die Scheiben des Innenteils mit einer formgleichen Scheibe oder mehreren solcher Scheiben zu einem verstärkten Innenteil ergänzt werden. Die Scheiben sind als Kreisscheibensegmente zur reibungsarmen Kraftübertragung dergestalt ausgebildet, dass der Außenrand und der eingebuchtete Innenrand der Scheiben zahnförmige, von dem bogenförmigen Außenrand ausgehend nach innen gerichtete Vorsprünge mit Evolventenkontur einschließen. Zum Antrieb der Schubkette ist ein Kettenantriebsrad vorgesehen, welches an die Gliederform der Schubkette bzw. deren Scheiben dadurch angepasst ist, dass die äußeren Enden der Zähne des Kettenrads im Wesentlichen zylindrisch geformt sind. Diese Zähne des Kettenrads können reibungsarm an den radial zahnförmigen Vorsprüngen der Glieder der Schubkette bzw. der Scheiben des Innenteils der Kettenglieder zum Antrieb und gegebenenfalls zur Umlenkung der Schubkette mittels des Kettenrads gleiten. Bei Ausstattung der Endabschnitte der Zähne des Kettenrads mit drehbar gelagerten Rollen können diese besonders reibungsarm an den zahnförmigen Vorsprüngen der Scheiben abrollen, wodurch ein ruhiger Lauf und ein hoher Gesamtwirkungsgrad erreicht werden. Allerdings erfordern die drehbaren Rollen des Kettenrads einen größeren Herstellungsaufwand.

Der vorliegenden Erfindung liegt daher die Aufgabe zugrunde, die Teile der Kettenglieder der Schubkette so auszubilden, dass deren Fertigung weiter vereinfacht wird und dass die aus ihnen bestehende Schubkette auch bei Umlenkung der Schubkette nur eine geringe Antriebskraft erfordert. Weiterhin soll die Kette außerhalb des Umlenkabschnitts möglichst keine seitliche Führung erfordern.

Zu Lösung dieser Aufgabe geht die Erfindung von einer mit einem Kettenantrieb betätigbaren Schubkette aus, die aus formgleichen Scheiben bündig zusammengesetzte Kettenglieder umfasst, wobei jede Scheibe wenigstens einen bogenförmigen Randabschnitt, der sich im Wesentlichen in einer Längsrichtung der Scheibe erstreckt, einen dem bogenförmigen Randabschnitt außen gegenüberliegenden Randabschnitt und zahnförmige Vorsprünge an einem der Randabschnitte aufweist, wobei in jeder Scheibe zwei Bolzenaufnahmelöcher vorhanden sind, die geeignet sind, jeweils einen, mehrere Scheiben zusammenhaltenden Bolzen aufzunehmen.

Für eine solche Schubkette sind die formgleichen Scheiben, aus denen jedes Kettenglied besteht, erfindungsgemäß jeweils in Form einer Zahnsegmentscheibe einem Zahnsegment eines Zahnrads nachgebildet, so dass aus dem bogenförmigen Randabschnitt der Zahnsegmentscheibe Zähne nach außen divergierend vorstehen. Dagegen ist der dem bogenförmigen Randabschnitt außen gegenüberliegende Randabschnitt der Zahnsegmentscheibe in deren Längsrichtung gerade bzw. plan geformt. Die Längsrichtung der Scheibe ist im Wesentlichen gleich deren Schubrichtung.

Aus solchen formgleichen Scheiben kleiner Bauform kann zusammen mit Bolzen ein vollständiges Kettenglied montiert werden, also einschließlich dessen Innenteil und Außenteilen, die das Innenteil seitlich einschließen. Dadurch, dass die als Zahnsegmentscheibe ausgebildete Scheibe von ihrem bogenförmigen Randabschnitt ausgehende, nach außen divergierende Zähne aufweist und der dem bogenförmigen Randabschnitt außen gegenüberliegende Randabschnitt in Längsrichtung der Zahnsegmentscheibe gerade bzw. plan ist, kann das Kettenglied jeweils mit einem abtriebsseitigen Stirnrad eines Kettenantriebs angetrieben und umgelenkt werden, das gemäß Anspruch 10 bezüglich dem angetriebenen und in einem Bogen umgelenkten Schubkettenabschnitt außen angeordnet ist, so dass das abtriebseitige Stirnrad des Stirnradgetriebes in die Zähne der Zahnsegmentscheiben eines Kettenglieds eingreift. Dabei werden die geraden Randabschnitte dieser Zahnsegmentscheiben an einer Umlenkrolle umgelenkt, die bezüglich dem angetriebenen und in einem Bogen umgelenkten Schubkettenabschnitt innen angeordnet ist. Dadurch kann das äußere abtriebsseitige Stirnrad mit einem kleinen Hebelarm auf die Kreissegmentscheiben eines Kettenglieds gleichmäßig einwirken, wobei das Kettenglied an den geraden Randabschnitten ihrer Zahnsegmentscheiben an der Umlenkrolle in deren Umfangsrichtung umgelenkt wird.

Gemäß Anspruch 2 besteht das Kettenglied jeweils ausschließlich aus dem formgleichen, mittels der beiden Bolzen, die jeweils mehrere Scheiben zusammenhalten, zusammengesetzten Zahnsegmentscheiben. Es sind also keine weiteren Teile für ein Kettenglied vorzusehen und zu montieren, insbesondere nicht an dessen Außenseiten.

Die Zahnsegmentscheibe ist weiterhin nach Anspruch 3 besonders zweckmäßig mit wenigstens zwei stirnseitig außen aneinander liegenden Abstützflächen im Wesentlichen quer zur Längsrichtung der Zahnsegmentscheibe ausgebildet und weist auf einer Seite der Zahnsegmentscheibe eine von dieser Seite vorstehenden Nocke in Höhe der Abstützflächen auf. - Die Höhe ist auf den geraden Rand der senkrecht ausgerichteten Zahnsegmentscheibe bezogen. - Die Nocke kann sich somit an jeweils einer der Abstützflächen einer Zahnsegmentscheibe eines stirnseitig benachbarten Kettenglieds abstützen und einen Teil der Schubkraft übertragen, die das Kettenglied aufnimmt.

Besonders zweckmäßig weist die Zahnsegmentscheibe gemäß Anspruch 4 jeweils auf der der hervorstehenden Nocke außen gegenüber liegenden Seite eine Vertiefung auf, in die eine solche Nocke einer seitlich bündig benachbarten zweiten oder weiteren Zahnsegmentscheibe des Innenteils des Kettenglieds mit Übermaß passt. Durch Einsetzen der Nocke der letztgenannten Zahnsegmentscheibe des Innenteils in die Vertiefung der erstgenannten Zahnsegmentscheibe kann das Innenteil vormontiert werden und eine leichte Endmontage des Kettenglieds gestatten. Die Nocke einer Zahnsegmentscheibe kann somit beide Funktionen ausüben gemäß den Ansprüchen 3 und 4.

Aus einer einfachen Ausführungsform der Zahnsegmentscheibe nach Anspruch 5 brauchen nur drei Zähne ausgeformt zu sein.

Wegen der im Wesentlichen planen Form der Zahnsegmentscheibe ist diese fertigungsgünstig und gemäß den Ansprüchen 6 und 7 wahlweise zur Fertigung als Stanzteile als auch von gegossene Teile geeignet. Die auf einer Seite der Zahnsegmentscheibe herausragende Nocke und die auf der außen gegenüber liegenden Seite vorgesehenen Vertiefung zur Aufnahme einer solchen Nocke können mit dem Stanzvorgang geprägt bzw. mit dem Guss geformt werden.

Ein besonders einfaches ausschließlich aus solchen untereinander formgleichen Zahnsegmentscheiben und zwei Bolzen zusammengesetztes Kettenglied umfasst nach Anspruch 8 zwischen zwei seitlich äußeren parallel und bündig angeordneten Zahnsegmentscheiben nur eine weitere Zahnsegmentscheibe als Innenteil, welche gegenüber den äußeren Zahnsegmentscheiben in Längsrichtung versetzt ist und durch einen der beiden Bolzen mit den beiden äußeren Zahnsegmentscheiben paketartig zusammengehalten wird und gegenüber diesen schwenkbar ist. In den durch den Versatz der inneren Zahnscheibe geschaffenen Raum zwischen den äußeren Zahnsegmentscheiben kann eine innere Zahnsegmentscheibe eines sich an das Kettenglied anschließenden weiteren Kettenglieds teilweise aufgenommen werden und durch den zweiten der beiden Bolzen schwenkbar gehalten werden.

Zur Übertragung einer größeren Schubkraft kann das Kettenglied jeweils zwischen den beiden seitlich äußeren, parallel und bündig angeordneten Zahnsegmentscheiben gemäß Anspruch 9 ein Innenteil bestehend aus zwei Zahnsegmentscheiben aufweisen, die formgleich wie die nur eine Zahnsegmentscheibe des Innenteils der vorstehenden Ausführungsform ausgebildet sind und miteinander verbunden sind. Dieses Innenteil kann als ein bündig zusammengesetztes Teil einfach zwischen den beiden äußeren Zahnsegmentscheiben mittels eines der beiden Bolzen, mit denen die äußeren Zahnsegmentscheiben zusammengehalten werden, so montiert werden, dass das Innenteil über jeweils eine Stirnseite der beiden äußeren Zahnsegmentscheiben hinausragt.

Beide vorstehende Ausführungsformen der Kettenglieder sind zum Antrieb der aus ihnen gebildeten Schubkette mit einem abtriebsseitigen Stirnrad des Stirnradgetriebes nach Anspruch 10 geeignet, wobei das abtriebsseitige Stirnrad bezogen auf den angetriebenen und umgelenkten Schubkettenabschnitt außen angeordnet ist, so dass es in die Zähne von bis zu 3 oder 4 Zahnsegmentscheiben, je nach Ausführungsform der Kettenglieder, gleichzeitig eingreifen kann. Dabei liegen die geraden Randabschnitte dieser Zahnsegmentscheiben an einer gemeinsamen Umlenkrolle an, die gegenüber dem abtriebsseitigen Zahnrad und der Schubkette innen angeordnet ist. Mit dieser Anordnung des Stirnrads ist es möglich, den Hebelarm, auf den die Kettenkraft des Schubkettenantriebs wirkt, sehr klein zu halten und es wird eine kraftverlustarme Umlenkung realisiert.

Hierzu ist das abtriebsseitige Stirnrad gemäß Anspruch 11 vorzugsweise so breit, dass es außer in die Zähne der inneren Zahnsegmentscheiben der Kettenglieder in die Zähne deren äußerer Zahnsegmentscheiben eingreifen kann. Durch Eingriff des Stirnrads in die Zähne der äußeren Zahnsegmentscheiben wird die Schubkette symmetrisch angetrieben und besser geführt.

Statt mit einem einzigen abtriebsseitigen Stirnrad des Stirnradgetriebes kann die voranstehende vorteilhafte Wirkung auch mit einer Gruppe miteinander verbundener abtriebsseitiger Stirnräder nach Anspruch 12 erzielt werden, indem die Gruppe so breit ist, dass deren Stirnräder in die inneren Zahnsegmentscheiben der Kettenglieder und/oder deren äußeren Zahnsegmentscheiben eingreifen.

Zum Antrieb des oben erwähnten Stirnradgetriebes mit dem abtriebsseitigen Stirnrad steht das Stirnradgetriebe über einen Zahnriementrieb und einen Schneckentrieb mit einem Elektromotor als Antriebsquelle nach Anspruch 13 in getriebetechnischer Verbindung. Der Zahnriementrieb ist als erste, die Drehzahl des Elektromotors herabsetzende Getriebestufe vorgesehen, deren Abtriebsseite mit dem Schneckentrieb verbunden ist, um diesen mit kleinem Verschleiß und hohem Wirkungsgrad unter geringer Geräuschentwicklung anzutreiben. Das in die antriebsseitige Schnecke eingreifende Schneckenrad des Schneckentriebs ist über ein Stirnrad mit den weiteren Elementen des Stirnradgetriebes getriebetechnisch verbunden, welches auch das abtriebsseitige Stirnrad aufweist, das in die Zähne eines Kettenglieds eingreift.

Weiterhin kann der Elektromotor des Kettenantriebs vorteilhaft nach Anspruch 14 mit seiner Motorwelle über eine Schlauchkupplung mit einer eingangsseitigen Welle des Zahnriementriebes gekuppelt sein, um keine Vibrationen zwischen dem Elektromotor und dem Zahnriementrieb sowie dem in Kraftflussrichtung folgenden Stirnradgetriebe zu übertragen.

Die Erfindung wird im Folgenden anhand eines Ausführungsbeispiels einer Zahnsegmentscheibe, die zum Zusammensetzen eines Kettenglieds verwendbar ist, eines Ausführungsbeispiels des Kettenglieds, sowie eines Ausführungsbeispiels eines an die Kettenglieder aus solchen Zahnsegmentscheiben angepassten Kettenantriebs erläutert. Es zeigen:

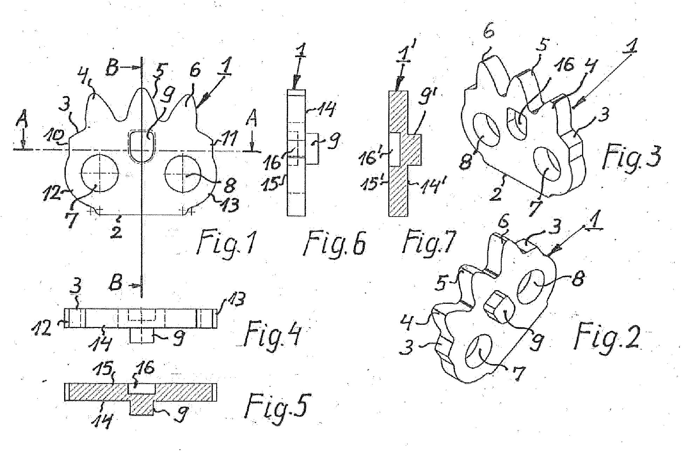

- Figur 1: eine Vorderansicht auf eine Zahnsegmentscheibe,
- Figur 1: eine Vorderansicht auf eine Zahnsegmentscheibe,
- Figur 2: eine isometrische Ansicht von oben auf die Vorderseite der Zahnsegmentscheibe nach Figur 1,
- Figur 3: eine isometrische Ansicht von oben auf die Rückseite einer Zahnsegmentscheibe gemäß Figur 1,
- Figur 4: eine Draufsicht auf die Zahnsegmentscheibe gemäß Figur 1,
- Figur 5: einen Schnitt durch die Zahnsegmentscheibe gemäß Figur 1 in der Schnittebene A-A,
- Figur 6: eine Ansicht auf eine Stirnseite der Zahnsegmentscheibe gemäß Figur 1,
- Figur 7: einen Schnitt durch die Zahnsegmentscheibe gemäß Figur 1 in der Schnittebene B-B,
- Figur 8: eine isometrische Ansicht auf einen angetriebenen und umgelenkten Schubkettenabschnitt bestehend aus Zahnsegmentscheiben gemäß den Figuren 1 bis 7 in einem Antriebs- und Umlenkbereich mit einem abtriebsseitigen Stirnrad eines Kettenantriebs, das in den Schubkettenabschnitt eingreift,
- Figur 9: eine isometrische Gesamtdarstellung des Kettenantriebs, dessen Abdeckungen teilweise entfernt sind,
- Figur 10: eine isometrische Ansicht auf einen antriebsseitigen Teil des Kettenantriebs mit einem Elektromotor und einem Zahnriemengetriebe und
- Figur 11: eine isometrische Darstellung des Kettenantriebs gemäß Figur 9 mit Abdeckungselementen.

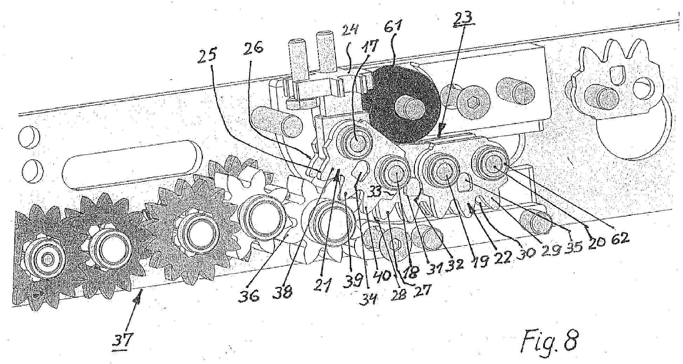

Die einem Zahnsegment eines Zahnrads nachgebildete Form der Zahnsegmentscheibe 1 geht aus den Figuren 1, 2 und 3 hervor. Die Form ist durch einen in Längsrichtung der Zahnsegmentscheibe in Figur 1 verlaufenden geraden Randabschnitt 2, der über der Dicke der Zahnsegmentscheibe plan ist, sowie durch einen diesem in Figur 1 oben gegenüberliegenden unterbrochenen bogenförmigen Randabschnitt 3 gekennzeichnet, aus dem drei Zähne 4, 5 und 6 divergierend nach oben hervorstehen. Der bogenförmige Randabschnitt ist den Zähnen 4 und 5 bzw. 5 und 6, sowie rechts neben dem Zahn 6 angenähert. Die von dem bogenförmigen Randabschnitt 3 der Zahnsegmentscheibe 1 nach oben divergierenden Zähne 4, 5 und 6 konvergieren in der entgegengesetzten Richtung zu einem Punkt, welcher dem Mittelpunkt eines Zahnrads entspricht, dem die Zahnradsegmentscheibe 1 teilweise nachgebildet ist. Die Zahnsegmentscheibe 1 weist ferner zwei in Längsrichtung beabstandete Bolzenaufnahmelöcher 7, 8 auf, die bei Montage eines Kettenglieds jeweils einen der Bolzen 17 bis 20 aufnehmen, deren Stirnseiten in Figur 8 sichtbar sind. Die Außenform der Zahnsegmentscheibe 1 ist durch stirnseitig außen einander gegenüberliegende Abstützflächen 10 und 11, die im Wesentlichen quer zu der Längsrichtung der Zahnsegmentscheibe 1 senkrecht verlaufen und sich an diese anschließende bogenförmige Abschnitte 12 und 13, die ebenfalls im Wesentlichen senkrecht verlaufen und an dem geraden Randabschnitt 2 enden, geschlossen. Von der Vorderseite 14 der Zahnsegmentscheibe 1 steht eine schildförmige Nocke 9 in der auf den geraden Randabschnitt 2 bezogenen Höhe der Abstützflächen 10 und 11 ab, die in eine kongruent geformte Vertiefung 16' in einer Rückseite 15' einer formgleich wie die Zahnsegmentscheibe 1 ausgebildeten Zahnsegmentscheibe 1', siehe Figur 7, mit Übermaß einsetzbar ist. Dies kann aus den Figuren 6 und 7 für den angenommenen Fall entnommen werden, dass die Zahnsegmentscheibe 1' in Figur 7 die zu der Zahnsegmentscheibe 1 in Figur 6 benachbarte Zahnscheibe darstellt.

Zur Veranschaulichung, wie Kettenglieder einer Schubkette aus untereinander formgleichen Zahnsegmentscheiben mit den Formmerkmalen zusammengesetzt sind, die in den Figuren 1 bis 7 mit den Zahnsegmentscheiben 1,1' dargestellt sind, wird auf Figur 8 Bezug genommen. Darin sind zwei Kettenglieder 21, 22 eines angetriebenen und umgelenkten Schubkettenabschnitts 23 in Antriebs- und Umlenkposition gezeigt, an den sich rechts unten ein gerader Schubkettenabschnitt anschließen kann, der mit dem Kettenglied 22 verbunden ist. In den angetriebenen und umgelenkten Schubkettenabschnitt 23 ist links erhöht ein Anschlussteil 24 für ein mit der Schubkette zu betätigendes Objekt eingesetzt.

Wie aus Figur 8 ersichtlich umfasst das Kettenglied 21 zwei äußere parallel und bündig angeordnete Kreissegmentscheiben 25 und 26, durch die Bolzen 17, 18 gesteckt sind, die sie zusammenhalten. Zwischen den beiden äußeren Zahnsegmentscheiben 25 und 26 ist ein Abschnitt eines schwenkbaren Innenteils, bestehend aus zwei bündig zueinander angeordneten inneren Zahnsegmentscheiben 27, 28 eingeschlossen. Hierzu ist der Bolzen 18 auch durch diese inneren Zahnsegmentscheiben 27, 28 gesteckt. Das Kettenglied 21 ist deswegen durch die beiden äußeren Zahnsegmentscheiben 25, 26 und die von ihnen teilweise eingeschlossenen beiden inneren Scheiben 27, 28 definiert. In ähnlicher Weise nimmt das Kettenglied 22, das sich an das Kettenglied 21 in Figur 8 rechts unten anschließt, zwischen äußeren Zahnsegmentscheiben 29, 30 einen zweiten Abschnitt der zueinander bündig angeordneten inneren Zahnsegmentscheiben 27, 28 auf. Den inneren Zahnsegmentscheiben 27, 28 entsprechende weitere innere Zahnsegmentscheiben können zwischen die beiden äußeren Zahnsegmentscheiben 29, 30 des Kettenglieds 22 eingeschoben sein und mit dem Bolzen 20 schwenkbar zwischen den beiden äußeren Zahnsegmentscheiben 29, 30 gehalten werden.

Figur 8 zeigt weiterhin eine schildförmige Nocke 31, die aus der inneren Zahnsegmentscheibe 27 ausgeformt ist. Die Nocke 31 kann an einem bogenförmigen Abschnitt anliegen, der sich an eine gerade Abstützfläche 33 der äußeren Zahnsegmentscheibe 25 des Kettenglieds 21 anschließt, wenn dieses durch einen Kettenantrieb von links nach rechts in Figur 8 geschoben wird, und sich dabei andererseits an einer geraden Abstützfläche 32 des Kettenglieds 22 abstützen kann. In Figur 8 verdeckt ist eine bündig zu der Nocke 31 ausgeformte, nicht bezeichnete Nocke der inneren Zahnsegmentscheibe 28, wobei sich die verdeckte Nocke in eine kongruente Vertiefung der inneren Zahnsegmentscheibe 27 erstreckt und in dieser mit Übermaß formschlüssig anliegt. Derartige Vertiefungen 34, 35 sind auch in den äußeren Zahnsegmentscheiben 25 und 29 der Kettenglieder 21 und 22 vorgesehen, dort jedoch funktionslos und durch die formgleiche Ausbildung sämtlicher Zahnsegmentscheiben bedingt. Die Nocke 31 dient zur bündigen Verbindung der inneren Zahnsegmentscheiben 27 und 28 sowie gegebenenfalls zur Schubübertragung von dem Kettenglied 21 zu dem Kettenglied 22.

Aus Figur 8 kann weiterhin entnommen werden, wie die Schubkette mit dem Schubkettenabschnitt 23 in Antriebs- und Umlenkposition mittels eines abtriebsseitigen Stirnrads 36 eines Stirnradgetriebes 37 angetrieben wird, indem das Stirnrad 36 zwischen die Zähne 38, 39, 40 der äußeren Zahnsegmentscheibe 25 und entsprechende Zähne der Zahnsegmentscheibe 26 eingreifen kann, weil deren Abstand durch die Breite des Stirnrads 36 überbrückt wird. Dadurch wird das Kettenglied 21 seitlich gut geführt und die Schubkraft wird gleichmäßig übertragen.

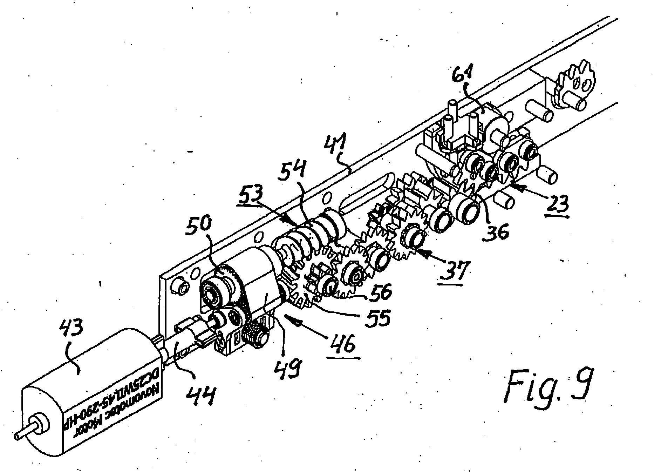

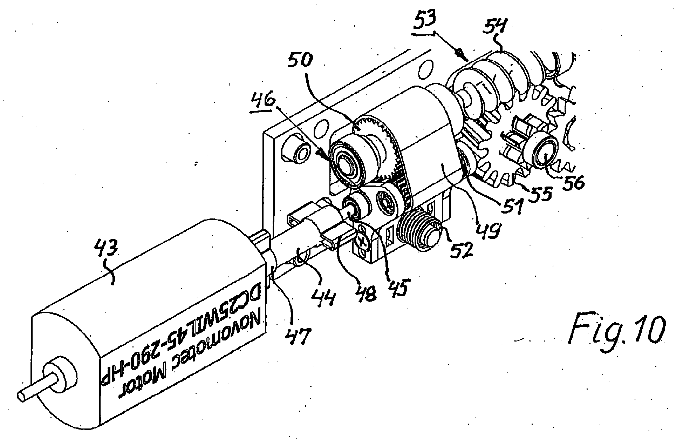

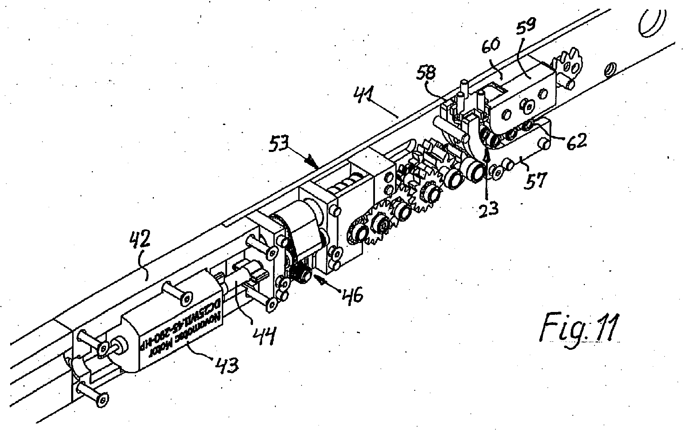

Figur 9 zeigt die Antriebseinheit, zu der das Stirnradgetriebe 37 mit dem abtriebsseitigen Stirnrad 36 gehört, an einem Gehäusewandabschnitt 41 eines Gehäuses, welches auch die Schubkette mit dem Schubkettenabschnitt 23 einschließt. An den in den Figuren 9 und 11 linken Enden des Kettenantriebs ist ein Elektromotor 43 angeordnet, dessen Motorwelle über eine Schlauchkupplung 44 mit einer Welle 45 eines Zahnriementriebes 46 gekuppelt ist, siehe auch Figur 10. Zur Befestigung der Schlauchkupplung 44 dienen Schlauchklemmen 47, 48. Mit der Welle 45 des Zahnriementriebs 46 ist koaxial ein den flachen Zahnriemen 49 antreibendes Zahnriemenrad verbunden, wobei der Zahnriemen 49 um ein abtriebsseitiges Zahnriemenrad 50 zu einem Endlosband umgelenkt wird. Ein Zahnriemenspannrad 51 läuft mit dem Zahnriemen 49 mit und dient in Verbindung mit einer Feder 52 als Zahnriemenspanner. Der Zahnriementrieb 46 stellt, z. B. mit dem Untersetzungsverhältnis 1:5, die erste Untersetzungsstufe des Kettenantriebs dar und gestattet eine verschleißgünstige unkomplizierte Gesamtgetriebekonstruktion bis zu dem abtriebsseitigen Stirnrad 36 des Stirnradgetriebes 37. Der Zahnriementrieb 46 gewährleistet einen hohen Wirkungsgrad bei leisem Lauf.

Zu dem Kettenantrieb gehört ein zwischen dem abtriebsseitigen Zahnriemenrad 50 und dem Stirnradgetriebe 37 angeordnete Schneckenradgetriebestufe bzw. ein Schneckentrieb 53, der eine Schnecke 54 aufweist, in die ein Schneckenrad 55 eingreift. Auf einer Schneckenradwelle 56 sitzt ein das Stirnradgetriebe 37 antreibendes Stirnrad 56.

Die isometrische Darstellung des Kettenantriebs in Figur 11 zeigt in Ergänzung der Darstellung gemäß Figur 9 äußere Führungselemente 57, 58 sowie innere Führungselemente 59, 60, die mit an den Enden der Bolzen der Schubkettenglieder angebrachten Röllchen 62 des Schubkettenabschnitts 23 in Umlenk- und Antriebsposition dieses Schubkettenabschnitts 23 zusammenwirken können. Figur 11 zeigt ferner nicht bezeichnete Abdeckungen und Querwände im Bereich des Zahnriementriebs 46 und des Schneckentriebs 53.

### Bezugszeichenliste:

- 1: Zahnsegmentscheibe
- 1': Zahnsegmentscheibe
- 2: gerader Randabschnitt
- 3: bogenförmiger Randabschnitt
- 4: Zahn
- 5: Zahn
- 6: Zahn
- 7: Bolzenaufnahmeloch
- 8: Bolzenaufnahmeloch
- 9: Nocke
- 10: Abstützfläche
- 11: Abstützfläche
- 12: bogenförmiger Abschnitt, vertikal
- 13: bogenförmiger Abschnitt, vertikal
- 14: Vorderseite
- 14': Vorderseite
- 15: Rückseite
- 15': Rückseite
- 16: Vertiefung
- 16': Vertiefung
- 17: Bolzen
- 18: Bolzen
- 19: Bolzen
- 20: Bolzen
- 21: Kettenglied
- 22: Kettenglied
- 23: Schubkettenabschnitt
- 24: Anschlussteil
- 25: äußere Zahnsegmentscheibe
- 26: äußere Zahnsegmentscheibe
- 27: innere Zahnsegmentscheibe
- 28: innere Zahnsegmentscheibe
- 29: äußere Zahnsegmentscheibe
- 30: äußere Zahnsegmentscheibe
- 31: Nocke
- 32: gerade Abstützfläche
- 33: gerade Abstützfläche
- 34: Vertiefung
- 35: Vertiefung
- 36: Stirnrad
- 37: Stirnradgetriebe
- 38: Zahn
- 39: Zahn
- 40: Zahn
- 41: Gehäuse-Wandabschnitt
- 42: Motorgehäuseteil
- 43: Elektromotor
- 44: Schlauchkupplung
- 45: Welle
- 46: Zahnriementrieb
- 47: Schlauchklemme
- 48: Schlauchklemme
- 49: Zahnriemen
- 50: abtriebsseitiges Zahnriemenrad
- 51: Zahnriemenspannrad
- 52: Feder
- 53: Schneckentrieb
- 54: Schnecke
- 55: Schneckenrad
- 56: Schneckenradwelle
- 57: äußeres Führungselement
- 58: äußeres Führungselement
- 59: inneres Führungselement
- 60: inneres Führungselement
- 61: Umlenkrolle
- 62: Röllchen

## Patentansprüche

1. Mit einem Kettenantrieb betätigbare schiebesteife Schubkette, die aus formgleichen Scheiben bündig zusammengesetzte Kettenglieder (21, 22) umfasst, wobei jede Scheibe wenigstens einen bogenförmigen Randabschnitt (3), der sich im Wesentlichen in einer Längsrichtung der Scheibe erstreckt, einen dem bogenförmigen Randabschnitt außen gegenüberliegenden Randabschnitt (2) und zahnförmige Vorsprünge an einem der Randabschnitte (2, 3) aufweist, wobei in jeder Scheibe zwei Bolzenaufnahmelöcher (7, 8) vorhanden sind, die geeignet sind, jeweils einen, mehrere Scheiben zusammenhaltende Bolzen (17 bis 20) aufzunehmen,
**dadurch gekennzeichnet,**
**dass** die Scheibe in Form einer Zahnsegmentscheibe (1, 1') einem Zahnsegment eines Zahnrads nachgebildet ist, so dass aus dem bogenförmigen Randabschnitt (3) der Zahnsegmentscheibe (1, 1') Zähne (4 bis 6) nach außen divergierend vorstehen, und dass der dem bogenförmigen Randabschnitt (3) außen gegenüberliegende Randabschnitt (2) in Längsrichtung der Zahnsegmentscheibe (1,1') gerade bzw. plan ist.

2. Schubkette nach Anspruch 1,
**dadurch gekennzeichnet,**
**dass** das Kettenglied (1, 1') jeweils ausschließlich aus den formgleichen, mittels der beiden Bolzen (17, 18, 19, 20) zusammengesetzten Zahnsegmentscheiben (1,1', 25 bis 30) besteht.

3. Schubkette nach Anspruch 1 oder 2,
**dadurch gekennzeichnet,**
**dass** jede Zahnsegmentscheibe (1, 1') wenigstens zwei stirnseitig außen einander gegenüberliegende Abstützflächen (10, 11) im Wesentlichen quer zu der Längsrichtung der Zahnsegmentscheibe (1, 1') aufweist und
**dass** eine Nocke (9) in Höhe der Abstützflächen (10, 11) von einer Seite (14) der Zahnsegmentscheibe (1, 1') vorsteht.

4. Schubkette nach Anspruch 3,
**dadurch gekennzeichnet,**
**dass** auf der der vorstehenden Nocke (9) außen gegenüberliegenden Seite (14a) der Zahnsegmentscheibe (1, 1') jeweils eine Vertiefung (16) geformt ist, in die die Nocke (9) einer zu der Zahnscheibe (1, 1') formgleichen, seitlich bündig benachbarten Zahnsegmentscheibe mit Übermaß passt.

5. Schubkette nach einem der Ansprüche 1 bis 4,
**dadurch gekennzeichnet,**
**dass** die Zahnsegmentscheibe (1, 1', 25 bis 30) drei Zähne (4 bis 6) aufweist.

6. Schubkette nach einem der vorangehenden Ansprüche,
**dadurch gekennzeichnet,**
**dass** die Zahnsegmentscheibe (1, 1', 25 bis 30) ein Stanzteil ist.

7. Schubkette nach einem der Ansprüche 1 bis 5,
**dadurch gekennzeichnet,**
**dass** die Zahnsegmentscheibe (1, 1`, 25 bis 30) ein gegossenes Teil ist.

8. Schubkette nach einem der Ansprüche 1 bis 7,
**dadurch gekennzeichnet,**
**dass** das Kettenglied (21, 22) zwischen zwei seitlich äußeren parallel und bündig angeordneten Zahnsegmentscheiben (25, 26; 29, 30) ein Innenteil bestehend aus nur einer Zahnsegmentscheibe (27) aufweist, die über jeweils eine Stirnseite der beiden äußeren Zahnsegmentscheiben (25, 26; 29, 30) herausragt.

9. Schubkette nach einem der Ansprüche 1 bis 7,
**dadurch gekennzeichnet,**
**dass** das Kettenglied (21; 22) zwischen zwei seitlich äußeren parallel und bündig angeordneten Zahnsegmentscheiben (25, 26; 29, 30) ein Innenteil bestehend aus zwei Zahnsegmentscheiben (27, 28) aufweist, die miteinander verbunden sind, und dass das Innenteil über jeweils eine Stirnseite der beiden äußeren Zahnsegmentscheiben (25, 26; 29, 30) herausragt.

10. Schubkette nach einem der Ansprüche 1 bis 9 mit einem Kettenantrieb, der einen Elektromotor (43) und ein Stirnradgetriebe (37) umfasst,
**dadurch gekennzeichnet,**
**dass** ein abtriebsseitiges Stirnrad (36) des Stirnradgetriebes (37) bezüglich einem in Antriebs- und Umlenkposition angetriebenen und umgelenkten Schubkettenabschnitt (23) außen angeordnet ist, so dass das abtriebsseitige Stirnrad (36) des Stirnradgetriebes (37) in die Zähne (38, 39, 40) der Zahnsegmentscheiben eingreift, und dass die geraden Randabschnitte dieser Zahnsegmentscheiben (25 bis 30) an einer Umlenkrolle (61) anliegen, die gegenüber dem abtriebsseitigen Stirnrad (36) innen angeordnet ist.

11. Kettenantrieb nach Anspruch 10,
**dadurch gekennzeichnet,**
**dass** das abtriebsseitige Stirnrad (36) so breit ist, dass das Stirnrad (36) außer in die inneren Zahnsegmentscheiben (27, 28) der Kettenglieder (21, 22) in deren äußeren Zahnsegmentscheiben (25, 26; 29, 30) eingreifen kann.

12. Kettenantrieb nach Anspruch 10,
**dadurch gekennzeichnet,**
**dass** eine Gruppe nebeneinander formschlüssig verbundener Stirnräder so breit ist, dass Stirnräder der Gruppe in die inneren Zahnsegmentscheiben (27, 28) der Kettenglieder (21, 22) und/oder die äußeren Zahnsegmentscheiben (25, 26; 29, 30) eingreifen können.

13. Kettenantrieb mit einem Elektromotor (43) und einem Stirnradgetriebe (37) zum Antrieb einer Schubkette, insbesondere nach Anspruch 10,
**dadurch gekennzeichnet,**
**dass** der Elektromotor (43) über einen Zahnriementrieb (46) mit dem Stirnradgetriebe (37) in getriebetechnischer Verbindung steht.

14. Kettenantrieb nach Anspruch 13,
**dadurch gekennzeichnet,**
**dass** der Elektromotor (43) über eine Schlauchkupplung (44) mit einer Welle (45) des Zahnriementriebs (46) gekuppelt ist.

15. Kettenantrieb nach Anspruch 14,
**dadurch gekennzeichnet,**
**dass** der Zahnriementrieb (46) über einen Schneckentrieb (53) mit dem Stirnradgetriebe (37) in Verbindung steht.
